# EUROPEAN PATENT APPLICATION

(11) **EP 2 781 298 A2**
(43) Date of publication of application: **24.09.2014**
(21) Application number: 14159042.2
(22) Date of filing: 12.03.2014
(51) Int. Cl.: B23P 21/00

(54) **Workpiece assembly system and method for assembling workpiece**

(30) Priority: 19.03.2013 JP 2013056996
(71) Applicant: Kabushiki Kaisha Yaskawa Denki, Kitakyushu-shi, Fukuoka 806-0004 (JP)
(72) Inventor: Harada, Toshiyuki, Kitakyushu-shi, Fukuoka 806-0004 (JP); Okawa, Ken, Kitakyushu-shi, Fukuoka 806-0004 (JP); Matsufuji, Kenji, Kitakyushu-shi, Fukuoka 806-0004 (JP); Ogasawara, Shinji, Kitakyushu-shi, Fukuoka 806-0004 (JP); Ikeda, Toshiaki, Kitakyushu-shi, Fukuoka 806-0004 (JP)
(74) Representative: Viering, Jentschura & Partner Patent- und Rechtsanwälte

(57) **Abstract**

A workpiece assembly system (10, 20, 30, 40) includes a first manual station (S_{M}) in which a person (M) performs an operation of providing a first component set (50S) onto a pallet (P); a first robot station (S_{A}) in which a robot (R) performs an operation of assembling the first component set (50S) into a workpiece (W) on a surface plate (Q, Q1, Q2); and a conveyor (C1, C2, C3, C4) that conveys the pallet (P) and the surface plate (Q, Q1, Q2) from the first robot station (S_{A}) to a subsequent manual station. After the robot (R) has removed the first component set (50S) from the pallet (P) and before the robot (R) finishes the operation in the first robot station (S_{A}), the pallet (P) is conveyed to the subsequent manual station prior to the surface plate (Q, Q1, Q2).

## Description

### BACKGROUND OF THE INVENTION

### 1. Field of the Invention

The present invention relates to a workpiece assembly system and a method for assembling a workpiece.

### 2. Description of the Related Art

A process of assembling industrial products involves, in some cases, a manual operation and a robotic operation. Japanese Unexamined Patent Application Publication No. 2003-62727 discloses an assembly apparatus including a station for workers to provide components and a station for robots to perform assembly.

In an existing system for assembling workpieces, human workers often have to wait for robots to finish their operation, whereas the robots often have to wait for the human workers to finish their operation. Thus, cycle time of the assembly operation has been difficult to reduce.

### SUMMARY OF THE INVENTION

An object of the present invention is to provide a system and a method for minimizing cycle time of workpiece assembly involving a manual operation and a robotic operation.

According to an aspect of the disclosure, a workpiece assembly system includes a first manual station in which a person performs an operation of providing a first component set onto a pallet, a first robot station in which a robot performs an operation of assembling the first component set into a workpiece on a surface plate, and a conveyor that conveys the pallet and the surface plate from the first robot station to a subsequent manual station. After the robot has removed the first component set from the pallet and before the robot finishes the operation in the first robot station, the pallet is conveyed to the subsequent manual station prior to the surface plate.

According to the present invention, cycle time of workpiece assembly involving a manual operation and a robotic operation can be minimized.

### BRIEF DESCRIPTION OF THE DRAWINGS

Fig. 1 schematically illustrates a workpiece assembly system according to a first embodiment of the present invention in a plan view.
Fig. 2 is a perspective view of an example of an industrial robot assembled by the workpiece assembly system illustrated in Fig. 1.
Figs. 3A and 3B are plan views illustrating steps in the process of assembling a workpiece with the assembly system according to the first embodiment.
Figs. 4A and 4B are plan views illustrating steps in the process of assembling a workpiece with the assembly system according to the first embodiment.
Figs. 5A and 5B are plan views illustrating steps in the process of assembling a workpiece with the assembly system according to a second embodiment.
Figs. 6A and 6B are plan views illustrating steps in the process of assembling a workpiece with the assembly system according to the second embodiment.
Fig. 7 schematically illustrates a workpiece assembly system according to a third embodiment of the present invention in a plan view.
Fig. 8 schematically illustrates a workpiece assembly system according to a fourth embodiment of the present invention in a plan view.

### DESCRIPTION OF THE EMBODIMENTS

Embodiments will be described below in detail referring to the drawings. In the description, the same components or components having the same function will be denoted by the same reference symbols and the redundant description is not given. Herein, a "workpiece" refers to an object completed by the assembly, for example, an industrial product or a component of the product.

### First Embodiment

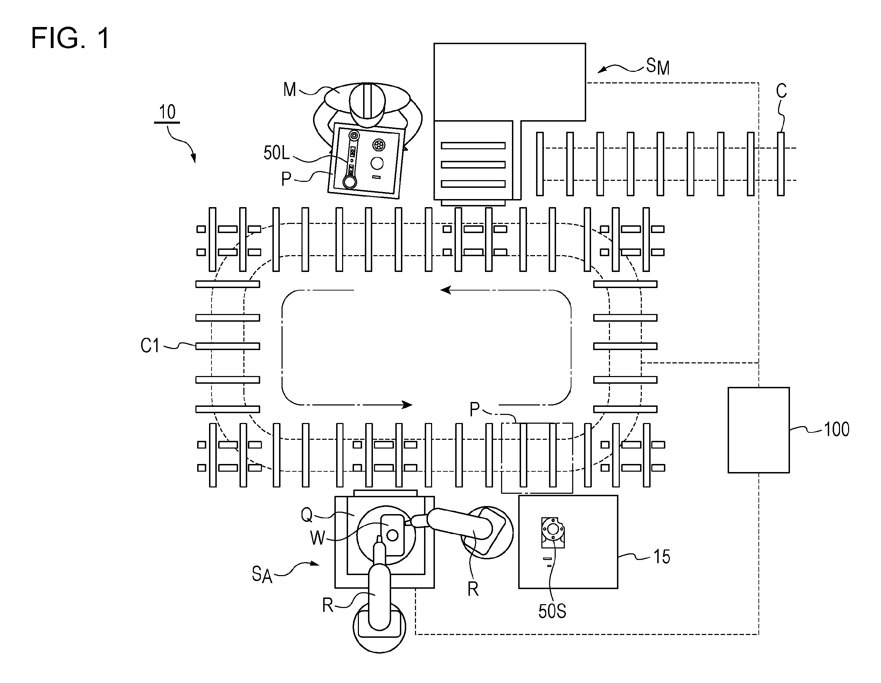

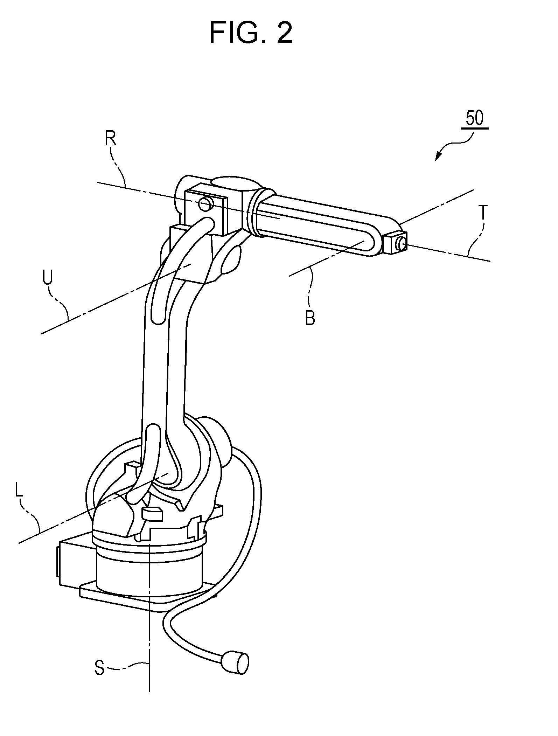

Fig. 1 schematically illustrates a workpiece assembly system 10 according to a first embodiment of the present invention in a plan view. The assembly system 10 illustrated in Fig. 1 is a system for assembling an industrial robot 50 illustrated in Fig. 2. The industrial robot 50 includes an S shaft, an L shaft, a U shaft, a B shaft, an R shaft, and a T shaft. Here, a case where the industrial robot 50 is assembled is described as an example, but an object completed by the assembly is not limited to the industrial robot 50.

The assembly system 10 includes a manual station S_{M}, a robot station S_{A}, an annular conveyor C1, and a controller 100 that integrally controls the stations S_{M} and S_{A} and the conveyor C1. Fig. 1 illustrates a state where robots R assemble an S-shaft component set 50S into a semi-finished industrial robot 50, in which a process is finished up to S-shaft assembly, on a surface plate Q in the robot station S_{A}. Meanwhile, in the manual station S_{M}, a worker M prepares an L-shaft component set 50L on a pallet P for the subsequent step. The L-shaft component set 50L includes components such as an arm, a motor, a speed reducer, and bolts. Since the process of assembling the industrial robot 50 involves a large amount of work for bolting, multiple robots R capable of bolting may be provided in the robot station S_{A} (see Fig. 1).

The pallet P carrying the component set 50S moves over the conveyor C1 in the direction of arrows illustrated in Fig. 1 and stops at a position drawn by a dot-and-dash line. The robots R pick up the components on the stopped pallet P and place the components on a table 15. The position at which the pallet P stops is preferably adjacent to the robots R and downstream from the robot station S_{A}. The pallet P emptied of the components becomes no longer in the stationary state and is transported to the manual station S_{M} again by the conveyor C1.

Examples of the annular conveyor C1 include a roller conveyor and a belt conveyor. When the assembly involves an operation in which stoppers (not illustrated) such as pins are caused to protrude from below the conveyor C1 to stop the pallet P and the surface plate Q at predetermined positions, the use of a roller conveyor having a gap between rollers is preferable.

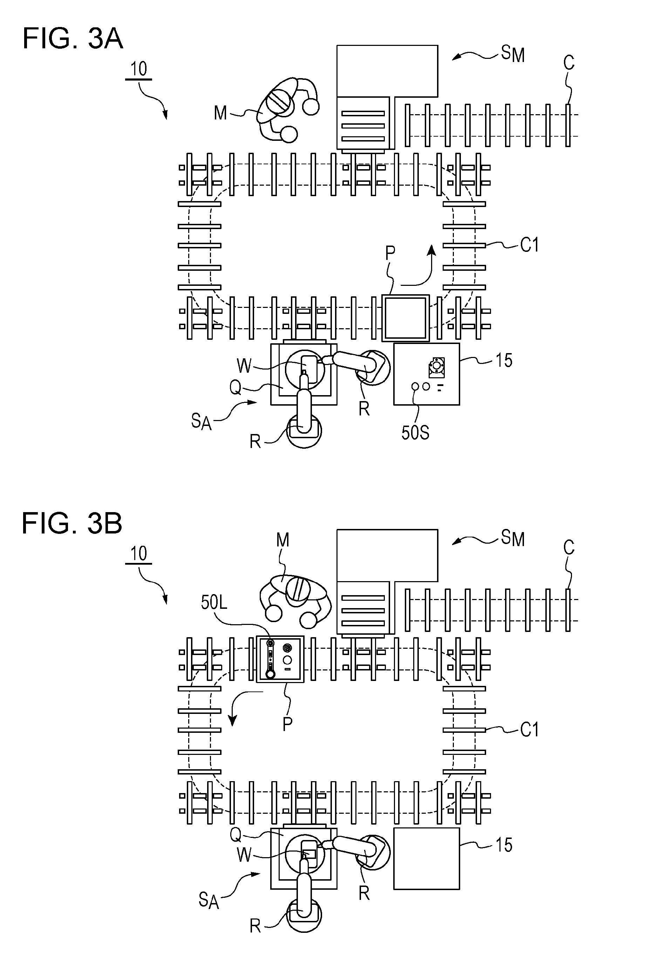

Referring now to Figs. 3A and 3B, the movement of the pallet P and the surface plate Q on which the workpiece W is assembled will be described. The conveyor C1 returns the pallet P to the manual station S_{M} after the robots R have removed the S-shaft component set (first component set) 50S from the pallet P and before the robots R finish the operation in the robot station S_{A} (Fig. 3A). Specifically, the robots R pick up the component set 50S on the pallet P and place the component set 50S on the table 15. The pallet P emptied of the component set 50S is returned to the manual station S_{M}. Since the pallet P is returned to the manual station S_{M} in the course of the operation of the robots R in this manner, a worker M can start the subsequent operation without having to wait for the robots R to finish their operation.

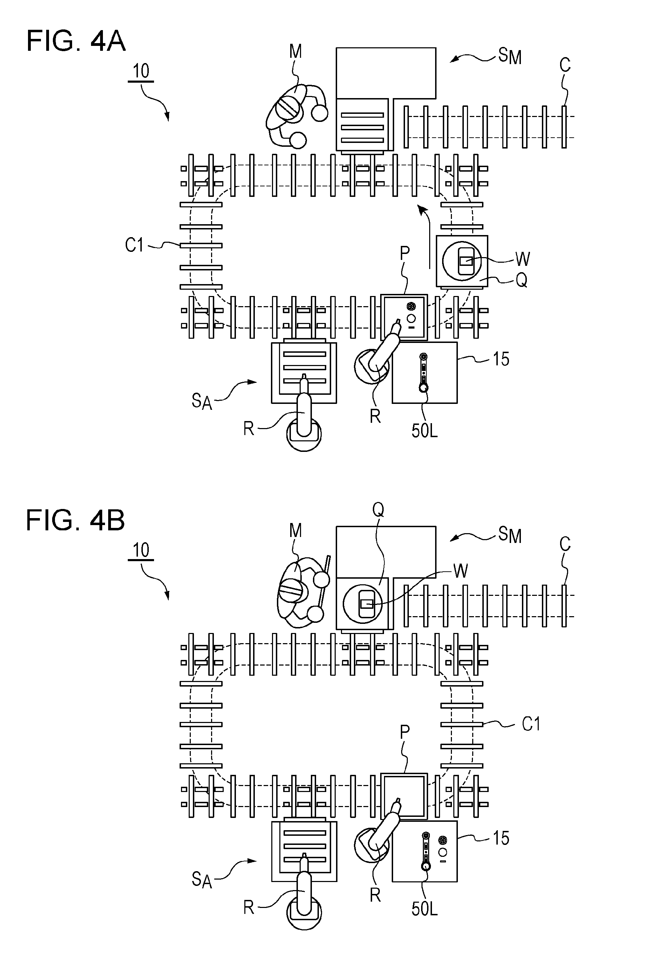

The worker M provides an L-shaft component set (second component set) 50L onto the returned pallet P. As soon as the worker M finishes providing the component set 50L, the conveyor C1 conveys the pallet P to the robot station S_{A} (Fig. 3B). When the robots R in the robot station S_{A} finish bolting, a semi-finished workpiece W on which the S shaft has been mounted is conveyed from the robot station S_{A} to the manual station S_{M} while being carried on the surface plate Q. Meanwhile, the component set 50L on the pallet P from the manual station S_{M} is placed on the table 15 by the robots R (Fig. 4A). The worker M checks the state of the workpiece W from the robot station S_{A} and then performs a manual operation (wiring, for example) that is difficult for the robots R to perform (Fig. 4B).

A method for assembling a workpiece according to the embodiment includes a step of manually providing the S-shaft component set 50S onto the pallet P in the manual station S_{M}; a step of assembling the component set 50S into a workpiece W on the surface plate Q using a robot R in the robot station S_{A}; a step of conveying the pallet P and the surface plate Q to the manual station S_{M} using the conveyor C1 in such a manner that the pallet P precedes the surface plate Q; and a step of manually providing the L-shaft component set 50L from the robot station S_{A} onto the pallet P in the manual station S_{M}. Specifically, in the method according to the embodiment, as illustrated in Fig. 3A, after the robots R have removed the component set 50S from the pallet P and before the robots R finish the operation in the robot station S_{A}, the pallet P is returned to the manual station S_{M} prior to the surface plate Q.

In this embodiment, while a set of the pallet P and the surface plate Q rotate over the conveyor C1 multiple times, a robot R performs multiple different operations for assembling different shafts to complete the industrial robot 50. Specifically, after the worker M repeatedly performs the operation of providing components and the wiring operation and the robots R repeatedly perform assembly an appropriate number of times, the industrial robot 50 including the S shaft, the L shaft, the U shaft, the B shaft, the R shaft, and the T shaft is completely assembled. Alternatively, a tip end portion beyond the U shaft may be separately assembled into a unit and this unit may be provided to the assembly system 10 as one part.

The industrial robot 50 completed after rotating over the conveyor C1 a predetermined number of times is conveyed to a place for the subsequent step via a conveyor C. Instead of the conveyor C, an automated guided vehicle (AGV) may be used for conveying the industrial robot 50 to a place for the subsequent step.

Since the worker M can perform the subsequent operation while the robots R perform their operation, this embodiment enables cycle time reduction. This embodiment also advantageously dispenses with the need for multiple lines for providing components since the components are provided at a single position (manual station S_{M}).

### Second Embodiment

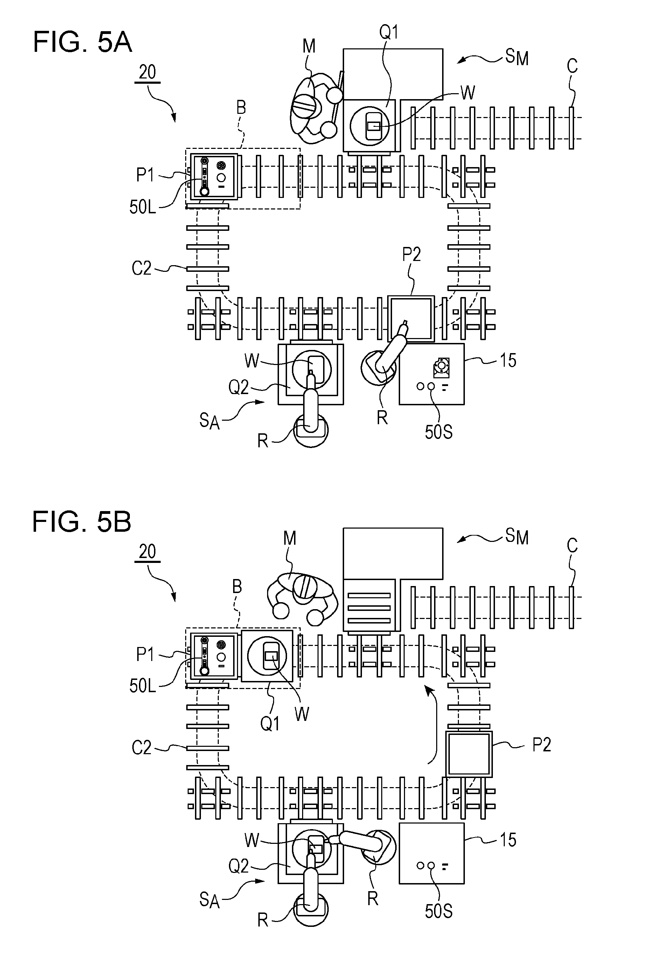

In the first embodiment, the case where the industrial robot 50 is assembled by rotating a set of the pallet P and the surface plate Q multiple times over the annular conveyor C2 is described as an example. However, as illustrated in Figs. 5A and 5B, two sets each including a pallet and a surface plate may be conveyed by the conveyor C2. An assembly system 20 illustrated in Figs. 5A and 5B includes a set of a pallet P1 and a surface plate Q1 upstream from the pallet P1 and a set of a pallet P2 and a surface plate Q2 upstream from the pallet P2. Hereinbelow, differences between the first embodiment and the second embodiment will be mainly described.

In a robot station S_{A} of the assembly system 20, robots R perform assembly of an S shaft on the surface plate Q2. Concurrently, in the manual station S_{M}, the worker M provides wiring of the S shaft on the surface plate Q1 (see Fig. 5A). When the worker M finishes the wiring, the conveyor C2 conveys the surface plate Q1 to a buffer B (see Fig. 5B), in which the pallet P1 has previously been placed. The buffer B is disposed between the manual station S_{M} and the robot station S_{A} for temporarily receiving a pallet and/or a surface plate from the manual station S_{M} while the robot station S_{A} is unable to accept the pallet and/or the surface plate. Another buffer may be disposed between the robot station S_{A} and the manual station S_{M}.

After the robots R have removed the S-shaft component set 50S from the pallet P2 and before the robots R finish their operation in the robot station S_{A}, the conveyor C2 returns the pallet P2 to the manual station S_{M} (see Fig. 5B). Since the pallet P2 is returned to the manual station S_{M} in the course of the operation of the robots R, the worker M can start the subsequent operation without having to wait for the robots R to finish their operation.

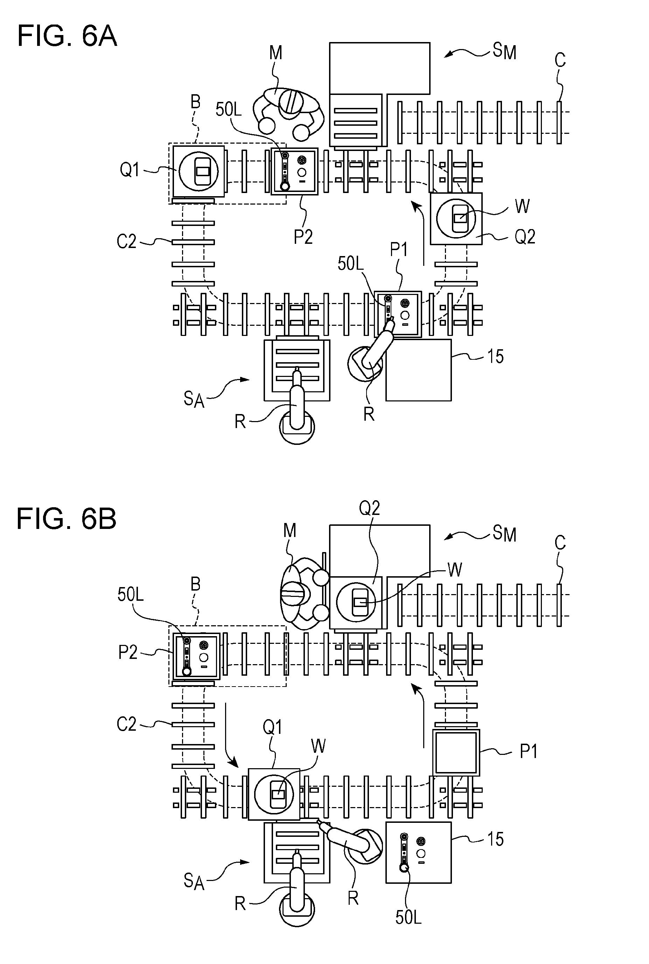

The worker M provides an L-shaft component set (second component set) 50L to the returned pallet P2. When the worker M nearly finishes providing the components, the robots R finish the operation in the robot station S_{A} and the surface plate Q2 is returned to the manual station S_{M} (see Fig. 6A). Then, the pallet P2 carrying the component set 50L is dispatched from the buffer B to the robot station S_{A}, while the surface plate Q2 is delivered from the robot station S_{A} to the manual station S_{M}. The worker M checks the assembly state of the workpiece W on the surface plate Q2 and then performs wiring on the workpiece W. At the time when the surface plate Q2 is dispatched from the robot station S_{A}, the surface plate Q1 is delivered from the buffer B to the robot station S_{A} (see Fig. 6B).

In this embodiment, two sets of a pallet and a surface plate rotate over the conveyor C2 multiple times, so that two industrial robots 50 can be simultaneously completed. The assembly system 20 allows the worker M to perform the subsequent operation while the robots R are performing their operation. The assembly system 20 also enables simultaneous assembly of two workpieces W, further reducing cycle time. The assembly system 20 also advantageously dispenses with the need for multiple lines for providing components since the components are provided at a single position (manual station S_{M}).

### Third Embodiment

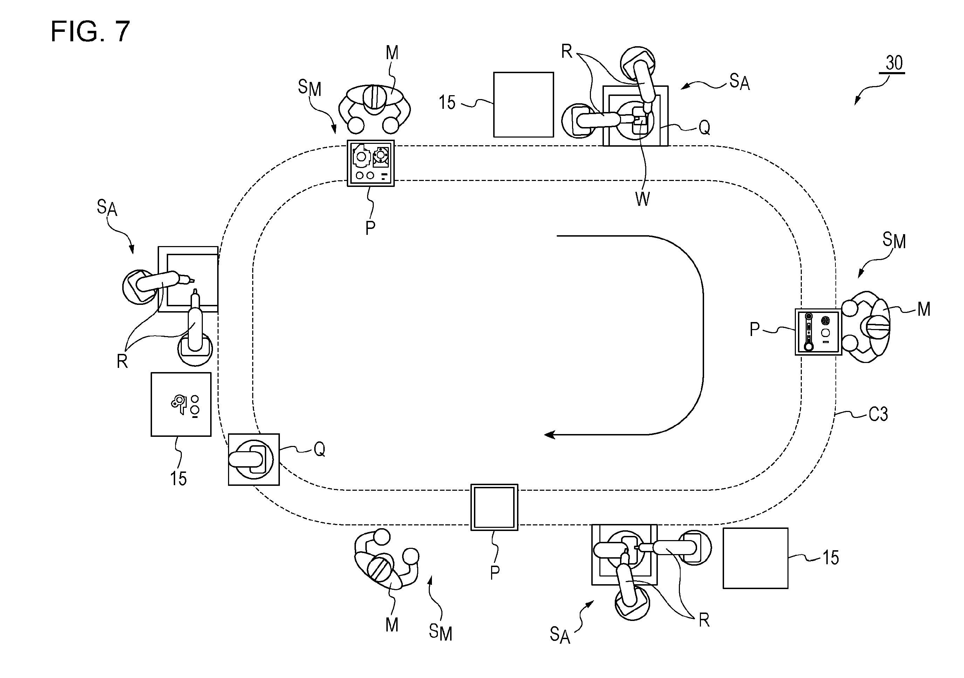

The first and second embodiments are described using the case, as an example, where a pallet or pallets and a surface plate or plates rotate between the manual station S_{M} and the robot station S_{A} multiple times. However, a system may be configured to assemble an industrial robot 50 after one rotation of a pallet and a surface plate over an annularly conveyor. Specifically, as illustrated in Fig. 7, manual stations S_{M} and robot stations S_{A} may be alternately disposed around an annular conveyor C3 to assemble an industrial robot 50 while a pallet P and a surface plate Q upstream from the pallet P rotate once over the conveyor C3. An assembly system 30 according to the third embodiment includes three manual stations S_{M} (first to third manual stations) and three robot stations S_{A} (first to third robot stations). The numbers of stations may be appropriately changed in accordance with products to be assembled.

Since the assembly system 30 allows a worker M to start the subsequent operation while a robot R is performing its operation, cycle time can be further reduced. The assembly system 30 also advantageously enables a pallet P subjected to a final step to be returned to an initial step via the conveyor C3.

### Fourth Embodiment

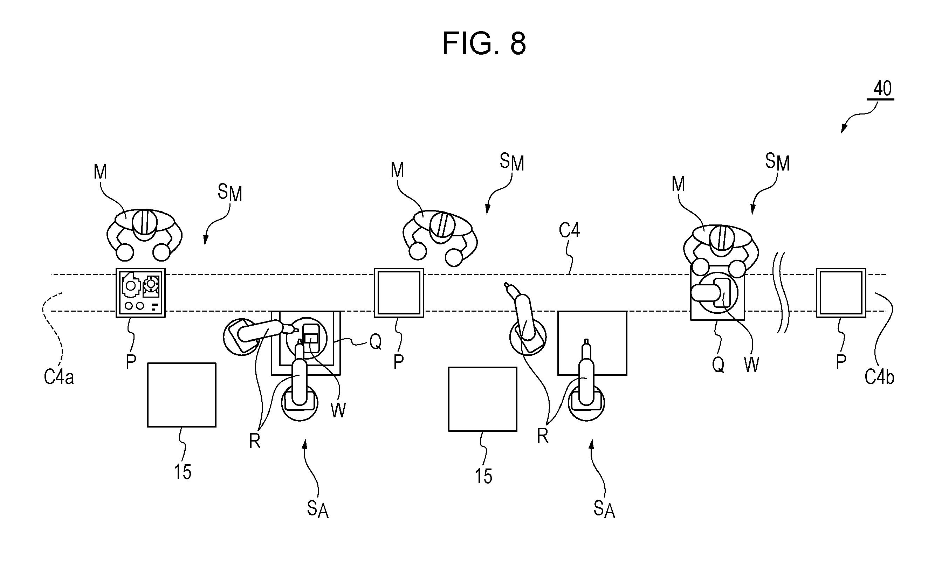

The third embodiment is described using the annular conveyor C3 as an example, but a conveyor having an initial end and a terminal end may be used instead of an annular conveyor. A linear conveyor illustrated in Fig. 8 or a curved conveyor (not illustrated) may be used.

A conveyor C4 illustrated in Fig. 8 has an initial end C4a and a terminal end C4b. Manual stations S_{M} and robot stations S_{A} are alternately arranged along the direction in which the conveyor C4 extends. An assembly system 40 may assemble an industrial robot 50 by bringing a pallet P and a surface plate Q upstream from the pallet P to the terminal end C4b while subjecting them to operations at the stations S_{M} and S_{A}. The assembly system 40 allows a worker M to start the subsequent operation while a robot R is performing its operation, thereby reducing cycle time.

Although some embodiments have been described above in detail, they are not restrictive. Although a case where an industrial robot 50 is assembled is described as an example in an embodiment, a dual-arm robot may be assembled instead of the industrial robot 50. Alternatively, industrial products other than robots may be assembled.

## Claims

1. A workpiece assembly system (10, 20, 30, 40), comprising:
a first manual station (S_{M}) in which a person (M) performs an operation of providing a first component set (50S) onto a pallet (P);
a first robot station (S_{A}) in which a robot (R) performs an operation of assembling the first component set (50S) into a workpiece (W) on a surface plate (Q, Q1, Q2); and
a conveyor (C1, C2, C3, C4) that conveys the pallet (P) and the surface plate (Q, Q1, Q2) from the first robot station (S_{A}) to a subsequent manual station,
wherein, after the robot (R) has removed the first component set (50S) from the pallet (P) and before the robot (R) finishes the operation in the first robot station (S_{A}), the pallet (P) is conveyed to the subsequent manual station prior to the surface plate (Q, Q1, Q2).

2. The assembly system according to Claim 1, wherein the conveyor is annularly disposed and the subsequent manual station is the first manual station.

3. The assembly system according to Claim 2, wherein the system concurrently assembles two sets each including the pallet and the surface plate into two workpieces.

4. The assembly system according to Claim 1, wherein the conveyor has an initial end and a terminal end.

5. The assembly system according to Claims 1 to 4, further comprising a second manual station serving as the subsequent manual station.

6. The assembly system according to Claims 1 to 5, wherein a second component set (50L) is provided onto the pallet in the subsequent manual station.

7. The assembly system according to Claim 6, further comprising a subsequent robot station in which a robot performs an operation of assembling the second component set (50L) into another workpiece on the surface plate.

8. The assembly system according to Claim 7, wherein the conveyor is annularly disposed and the subsequent robot station is the first robot station.

9. The assembly system according to Claims 1 to 8, further comprising a buffer (B), in which either one of the pallet and the surface plate is stored, at a portion of the conveyor.

10. The assembly system according to Claims 1 to 9, wherein the operation performed in each manual station includes assembling a workpiece in addition to providing a component set onto the pallet.

11. The assembly system according to Claim 10, wherein the operation performed in each manual station includes wiring.

12. The assembly system according to Claims 1 to 11, wherein the operation performed in the robot station includes bolting.

13. A method for assembling a workpiece, comprising:
manually providing a first component set (50S) onto a pallet (P) in a first manual station (S_{M});
assembling the first component set (50S) into a workpiece (W) on a surface plate (Q, Q1, Q2) using a robot (R) in a first robot station (S_{A});
conveying the pallet (P) from the first manual station (S_{M}) to the first robot station (S_{A}) using a conveyor (C1, C2, C3, C4); and
conveying the pallet (P) and the surface plate (Q, Q1, Q2) from the first robot station (S_{A}) to a subsequent manual station using the conveyor (C1, C2, C3, C4),
wherein, after the robot (R) has removed the first component set (50S) from the pallet (P) and before the robot (R) finishes the operation in the first robot station (S_{A}), the pallet (P) is conveyed to the subsequent manual station prior to the surface plate (Q, Q1, Q2).
